# EUROPÄISCHE PATENTANMELDUNG

(11) **EP 0 590 290 A1**
(43) Veröffentlichungstag der Anmeldung: **06.04.1994**
(21) Anmeldenummer: 93113187.4
(22) Anmeldetag: 18.08.1993
(51) Int. Cl.: G01N 27/28, F15B 15/14

(54) **Wechselarmatur mit einem Sensor**

(30) Priorität: 28.09.1992 CH 3027/92
(71) Anmelder: Mettler-Toledo AG, CH-8606 Greifensee (CH)
(72) Erfinder: Zimmermann, Robert Karl, CH-6330 Cham (CH)

(57) **Zusammenfassung**

In einem Zylinder (10) ist ein pneumatisch betätigbarer Kolben (20) angeordnet, durch den eine hohle, mit dem Kolben (20) gekoppelte Kolbenstange (22) verläuft, in der der Sensor (4) herausnehmbar angeordnet ist. Die Kolbenstange (22) verläuft durch beide Stirnwände (12,16) des Zylinders (10) und weist ein Kopfstück (26) auf, das in zurückgezogener Ruhestellung der Kolbenstange (22) dichtend in einem Kopfteil (14) des Zylinders (10) angeordnet ist. Im Bereich eines Messkopfes (34) des Sensors (4) enthält die Kolbenstange (22) mindestens eine seitliche Eintrittsöffnung (30). Zur Vermeidung eines unbeabsichtigten Ausstossens der Kolbenstange bei nicht eingesetztem Sensor (4) ist die Kolbenstange (22) auf der dem Kopfstück (26) abgewandten Seite des Kolbens (20) mit mindestens einer Durchtrittsöffnung (46) versehen, durch die die Druckluft entweichen kann, wenn kein Sensor (4) eingesetzt ist. Bei eingesetztem Sensor sind die Oeffnungen (46), durch die die Druckluft entweicht, mediumsdicht abgeschlossen.

## Beschreibung

Die Erfindung betrifft eine Wechselarmatur mit einem Sensor gemäss Oberbegriff des Anspruches 1.

Wechselarmaturen mit einem Sensor der eingangs genannten Art sind mehrfach bekannt. Dabei besteht das Problem, dass die Wechselarmatur auch bei nicht eingesetztem Sensor betätigt werden kann, so dass die Kolbenstange in die Messstellung fahren kann. Das zu messende Medium kann dann durch die seitliche Eintrittsöffnung in die Kolbenstange gelangen und ausfliessen, was zu Personen- und oder Sachschäden führt.

Aufgabe der Erfindung ist es, eine Wechselarmatur mit einem Sensor der eingangs genannten Art so auszubilden, dass die erwähnten Nachteile vermieden werden.

Die gestellte Aufgabe wird erfindungsgemäss gelöst durch die kennzeichnenden Merkmale des Anspruches 1.

Dadurch, dass in der Kolbenstange auf der der Messeite abgewandten Seite des Kolbens eine durch den Sensor verschliessbare mit dem Zylinderraum kommunizierende Durchtrittsöffnung vorhanden ist, tritt das Druckmedium zum Betätigen der Kolbenstange in diese ein, wodurch ein Druckaufbau am Kolben verhindert wird, wenn der Sensor nicht eingesetzt ist, so dass der Kolben und damit die Kolbenstange nicht betätigt werden können. Dadurch wird auf einfachste Art eine vollständige Sicherheit gegen unbeabsichtigtes Einfahren der Kolbenstange in den Messraum erreicht.

Zum Abdichten des Raumes zwischen der Kolbenstange und dem Sensor sind gemäss Anspruch 2 beidseits der Durchtrittsöffnung Dichtungsringe angeordnet.

Die Ansprüche 3 bis 5 beschreiben vorteilhafte Ausführungsvarianten zur Verhinderung des Verdrehens des Kolbens und damit der Kolbenstange und auch des Sensors.

Ein Ausführungsbeispiel der Erfindung wird nachfolgend anhand der Zeichnung näher beschrieben, dabei zeigen:
- Figur 1: die Wechselarmatur mit eingesetztem Sensor in Messstellung, im Längsschnitt; und
- Figur 2: die Wechselarmatur der Figur 1 ohne Sensor und in Ruhestellung, im Längsschnitt.

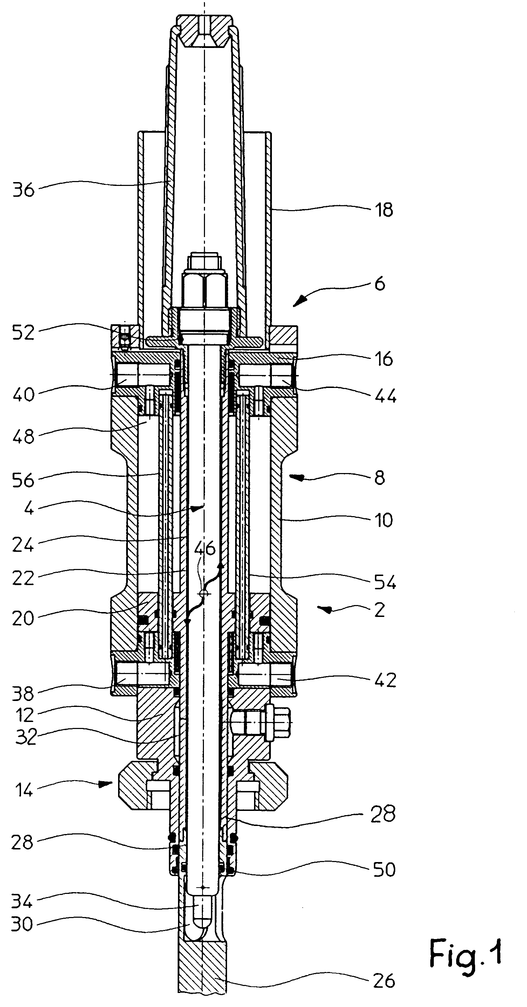

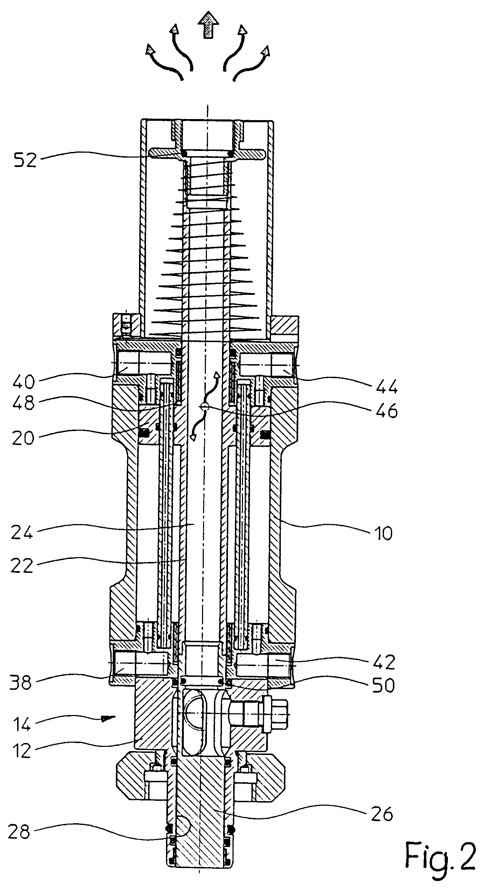

Die Figuren 1 und 2 zeigen eine Wechselarmatur 2 mit einem Sensor 4. Die Wechselarmatur 2 weist ein Gehäuse 6 mit einem pneumatischen Kolben/Zylinder-Aggregat 8 auf, das einen Zylinder 10 enthält, der nach vorne durch eine Stirnwand 12 und einen anschliessenden Kopfteil 14 und nach hinten durch eine hintere Stirnwand 16 und einen Schutzzylinder 18 abgeschlossen ist. Im Zylinder 10 ist ein Kolben 20 verschiebbar angeordnet, durch den eine Kolbenstange 22 verläuft, die hohl ausgebildet ist. Nach vorne ist der Hohlraum 24 durch ein Kopfstück 26 abgeschlossen, welches in der in Figur 2 gezeigten Ruhestellung eine Öffnung 28 des Kopfteiles 14 dichtend abschliesst. Im Anschluss an das Kopfstück 26 enthält die Kolbenstange 22 eine Eintrittsöffnung 30, die in Ruhestellung in einer Behandlungskammer 32 des Kopfteiles 14 liegt und in Messstellung in das zu messende Medium eintaucht, wie aus Figur 1 hervorgeht.

Die hohle Kolbenstange 22 nimmt den Sensor 4 auf, der im Bereich der Eintrittsöffnung 30 der Kolbenstange 22 einen Messkopf 34 aufweist. Am rückwärtigen Ende sind Mittel 36 zur Führung nicht näher dargestellter Anschlussleitungen vorhanden.

Das Kolben/Zylinder-Aggregat 8 weist verschiedene Anschlüsse 38,40,42,44 zur Zu- und Abführung von Druckluft auf. Auf der dem Kopfstück 26 abgewandten Seite des Kolbens 20 ist die Kolbenstange 22 mit mindestens einer Durchtrittsöffnung 46 versehen, durch die Druckluft vom oberen Zylinderraum 48 in den Hohlraum 24 der Kolbenstange 22 eindringen kann. Wenn in der Kolbenstange 22 kein Sensor 4 eingesetzt ist, kann sich im Zylinderraum 48 kein Druck aufbauen und es wird verhindert, dass die Wechselarmatur 2, d.h. der Kolben 20 und die Kolbenstange 22 betätigt werden kann bzw. können. Erst wenn der Sensor 4 in der Kolbenstange 22 eingesetzt ist, kann sich im Zylinderraum 48 ein Druck aufbauen, da beidseits der Durchtrittsöffnung 46 Dichtungsringe 50,52 das Abströmen von Druckluft verhindern, wodurch der Kolben angetrieben und die Kolbenstange mit dem Sensor 4 in die Messstellung der Figur 1 gebracht werden kann. Innerhalb des Zylinders 10 sind zwischen den Stirnwänden 12,16 verlaufende, diametral angeordnete Führungsstangen 54,56 vorhanden, die ein Verdrehen der Kolbenstange 22 und damit des Sensors 4 verhindert.

### BEZUGSZEICHENLISTE

- 2: Wechselarmatur
- 4: Sensor
- 6: Gehäuse
- 8: Kolben/Zylinder-Aggregat
- 10: Zylinder
- 12: Stirnwand
- 14: Kopfteil
- 16: Stirnwand
- 18: Schutzzylinder
- 20: Kolben
- 22: Kolbenstange
- 24: Hohlraum
- 26: Kopfstück
- 28: Öffnung
- 30: Eintrittsöffnung
- 32: Behandlungskammer
- 34: Messkopf
- 36: Führungsmittel
- 38: Anschluss
- 40: Anschluss
- 42: Anschluss
- 44: Anschluss
- 46: Durchtrittsöffnung
- 48: Zylinderraum
- 50: Dichtungsring
- 52: Dichtungsring
- 54: Führungsstange
- 56: Führungsstange

## Patentansprüche

1. Wechselarmatur mit einem Sensor, wobei in einem Zylinder (10) ein pneumatisch betätigbarer Kolben (20) angeordnet ist, durch den eine hohle, mit dem Kolben (20) gekoppelte Kolbenstange (22) verläuft, in der der Sensor (4) herausnehmbar angeordnet ist, wobei die Kolbenstange (22) durch beide Stirnwände (12,16) des Zylinders (10) verschiebbar geführt ist, wobei die Kolbenstange (22) an der Messeite ein geschlossenes Kopfstück (26) aufweist, das in zurückgezogener Ruhestellung dichtend in einem Kopfteil (14) des Zylinders (10) angeordnet ist und im Bereich eines Messkopfes (34) des Sensors (4) mindestens eine seitliche Eintrittsöffnung (30) aufweist, dadurch gekennzeichnet, dass die Kolbenstange (22) auf der dem Kopfstück (26) abgewandten Seite des Kolbens (20) mindestens eine den Hohlraum (24) der Kolbenstange (22) mit dem Zylinderraum (48) verbindende Durchtrittsöffnung (46) aufweist, wobei der Hohlraum (24) und damit die Durchtrittsöffnung (46) bei eingesetztem Sensor (4) nach aussen abgeschlossenen sind.

2. Wechselarmatur nach Anspruch 1, dadurch gekennzeichnet, dass beidseits der Durchtrittsöffnung (46) Dichtungsringe (50,52) zwischen der Kolbenstange (22) und dem Sensor (4) angeordnet sind.

3. Wechselarmatur nach Anspruch 1 oder 2, dadurch gekennzeichnet, dass der Kolben (20) an einem Führungsmittel (54,56) gegen Verdrehen geführt ist.

4. Wechselarmatur nach Anspruch 3, dadurch gekennzeichnet, dass das Führungsmittel (54,56) mindestens eine im Zylinder (10) angeordnete Führungsstange (54,56) aufweist.

5. Wechselarmatur nach Anspruch 4, dadurch gekennzeichnet, dass das Führungsmittel (54,56) mindestens zwei diametral zur Kolbenstange (22) im Zylinder (10) angeordnete Führungsstangen (54,56) aufweist.
